# EUROPEAN PATENT SPECIFICATION

(11) **EP 1 384 387 B1**
(45) Date of publication and mention of the grant of the patent: **24.11.2004**
(21) Application number: 02730074.8
(22) Date of filing: 26.03.2002
(51) Int. Cl.: H04Q 11/04

(54) **IMPROVEMENTS IN A THIRD GENERATION CELLULAR NETWORK**
VERBESSSERUNGEN IN ZELLULAREN NETZWERKEN DER DRITTEN GENERATION
AMELIORATIONS DE RESEAUX CELLULAIRES DE TROISIEME GENERATION

(30) Priority: 30.04.2001 GB 0110543
(43) Date of publication of application: 28.01.2004
(73) Proprietor: SIEMENS AKTIENGESELLSCHAFT, 80333 München (DE); Mobisphere Ltd., Bracknell, Berkshire RG12 8FZ (GB)
(72) Inventor: REIM, Thomas, 88481 Balzheim (DE); RITTERHOFF, Carsten, Reading, Berkshire RG6 5UB (GB); HERTEL, Guenther, 82223 Eichenau (DE)
(74) Representative: Humphrey-Evans, Edward John
(86) International application number: PCT/EP2002/003486
(87) International publication number: WO 2002/089519

(56) References cited:
- EP-A- 0 768 777
- AGHA AL K ET AL: "MA-WATM: A NEW APPROACH TOWARDS AN ADAPTIVE WIRELESS ATM NETWORK" MOBILE NETWORKS AND APPLICATIONS, ACM, NEW YORK, NY, US, vol. 4, no. 2, May 1999 (1999-05), pages 101-109, XP000866896 ISSN: 1383-469X

## Description

### Field of the invention

The present invention relates to third generation cellular networks and, in particular, to the backbone ATM switching network between a base station and other base stations or other networks.

### Background to the invention

First and second generation cellular radio systems are currently in widespread use throughout the world providing telecommunications to mobile users. In order to overcome problems associated with capacity demand and in order to provide text and data messaging third generation radio systems have been proposed. One such third generation system is the universal mobile telecommunications system (UMTS) as proposed by the Third Generation Partnership (3GPP) body.

In recent years, there has been a sharp increase in the demand for network capacity/bandwidth. One network technology which has been favoured is the asynchronous transfer mode (ATM) technology. ATM technology improves upon traditional switched networks by introducing virtual circuits and intelligent switching. Virtual circuit bandwidth allocation and transfer characteristic, such as delays and delay variations can be tailored to the needs of any specific application.

Furthermore ATM networks also typically operate over a wider and higher range of speed than other network topologies with common circuit rates of data transfer of 600 Mbps, with rates for certain applications exceeding 10 Gbps. The ATM protocol is intended for transmission on a reliable physical layer such as optical fibres, radio relay etc..

Asynchronous transfer Mode (ATM) technology has been specified for the transport of user and control data ("the data") between base stations and the controlling entity, referred to as the Radio Network Controller (RNC). The data from each base station is passed through a Node (referred to, in 3G systems as Node B) via an ATM switch to a RNC or, in regions of high density base station deployment, several Node B's communicate with a Node B concentrator where ATM communication takes place with respect to the RNC. An ATM wireless network is described in "MA-WATM: A new approach towards an adaptive wireless ATM network" (AGHA AL K ET AL) 2, May 1999.

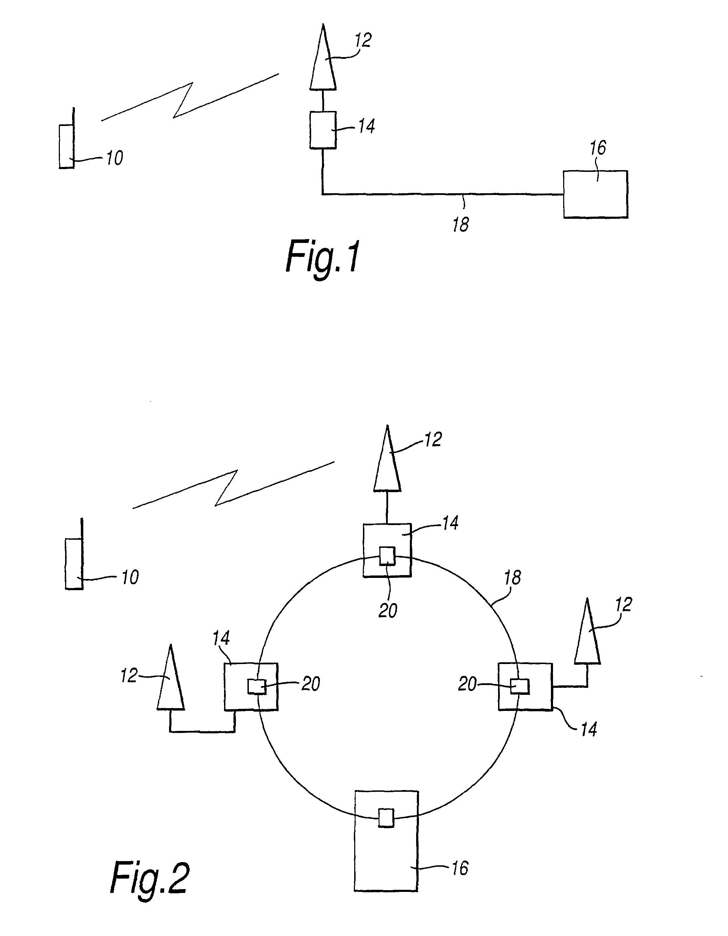

Referring to Figure 1 there is shown a 3-G network: base stations 12 act as interfaces between mobile users 10 and the RNC (Iub interface) 14 otherwise referred to as a Node B by 3GPP, the node B transmitting signals with respect to the radio network controller, RNC, 16. Accordingly, each Node B is associated with the radio interface infrastructure (transceiver, power amplifier, antennas, and the related control) and comprises of a terrestrial transmission infrastructure. Node B could be an ATM concentrator (ATM switch) which supports IMA or also a Node B which acts both as a UMTS base station and ATM concentrator. The latter configuration is often referred to as an Iub hub configuration.

A Node B concentrator may therefore be seen to be more cost efficient. The development of 3G networks has proven to be costly thus far and all measures to reduce costs are taken wherever appropriate. The use of a Node B concentrator - RNC link enables high bit rate transmission lines to be deployed.

Inverse multiplexing over ATM (ATM (IMA)) is deployed for a cost efficient bandwidth increase. Conveniently ATM (IMA) may be implemented by the grouping of low priced E1 2 Mbit/s lines or the use of microwave links to a transmission link with a bandwidth of n x 2Mbit/s. In 3GPP also T1 (1.5 Mbit/s) might be used in addition to E1. IMA can be based on E1, J1 and T1lines: these lines tend to be adopted by European, Japanese and American -based standards bodies respectively. Such lines provide transmission of data independent of the carrier protocol, i.e. it is transparent to the particular carrier protocol. For convenience, references hereinafter to such protocols shall be limited to E1, but it is to be understood that J1, T1 or equivalent standards may also be utilised. Similarly, the term Node B has been employed throughout, whilst equivalent types of nodes are also intended.

In a system made in accordance with Figure 1, such a system would be liable to complete communications failure in the event that a transmission link failed.

### Object of the invention

The present invention seeks to provide a 3G cellular communications system with a reduced likelihood of failure.

### Statement of invention

In accordance with a first aspect of the invention there is provided a third generation wireless communications network including a plurality of base station radio interfaces which provide cellular wireless coverage; at least one Node B and a radio network controller;
wherein signals and signalling data transmitted between the radio interfaces and the radio network controller are routed between said at least one Node B;
wherein the at least one Node B provides an IMA functionality;
wherein the signals and signalling data transmitted between said at least one node and the radio network controller is transmitted in asynchronous transfer mode;
wherein there are at least two signal paths between the said at least one node and the radio network controller whereby to provide an IMA protection mode or an IMA aggregation mode.

In accordance with one embodiment there is provided a plurality of network entities comprising Node Bs and a radio network controller
wherein each node is operable to communicate with at least two other nodes or at least one other Node B and the radio network controller;
wherein there are physical links between the radio interface and each Node B;
wherein there at least two signal paths between each Node B and at least two other network entities.

In a third embodiment there are a plurality of nodes;
wherein the Node Bs are grouped such that they communicate with at least one Node B concentrator;
wherein the at least one concentrator communicates with the radio network controller and,
wherein there are at least two transmission paths between the at least one Node B concentrator and the radio network controller.

Preferably, there are a plurality of transmission paths between the Node Bs and the node concentrators.
The present invention provides a cost efficient use of inverse multiplexers in third generation cellular networks. The present invention also provides an increase in bandwidth and an improvement in bandwidth availability by the use of low priced - low capacity transmission lines such as E1 2 Mbit/s transmission lines.

### Brief description of the figures

The invention may be understood more readily, and various other aspects and features of the invention may become apparent from consideration of the following description and figures as shown in the accompanying sheets, wherein:
Figure 1 shows an example of a third generation network configured according to the standard as presently defined;
Figure 2 shows an example of a first embodiment of the invention;
Figure 3 show two types of inverse multiplexer connection with E 1 lines;
Figure 4 shows an example of a second embodiment of the invention;
Figures 5 and 6 show the effect of failure in the networks made in accordance with the first and second embodiments of the invention;
Figure 7 shows the principles of inverse multiplexing over ATM; and
Figure 8 shows the self-healing attributes of an ATM network made in accordance with invention.

### Detailed description of the invention

There will now be described, by way of example, the best mode contemplated by the inventors for carrying out the invention. In the following description, specific details are set out in order to provide a complete understanding of the present invention. It will be apparent, to those skilled in the art, that the present invention may be put into practice with variations of the specific.

Figure 1 shows a 3G system configured as presently determined by the standard. A mobile user 10 will communication with a radio interface 12 associated with a Node B 14 via wireless communications. The Node B will communicate with a radio network controller (RNC) 16 via an ATM transmission network 18. In the event of failure of the transmission network at any point, communications between nodes either side of the failure point would not be possible.

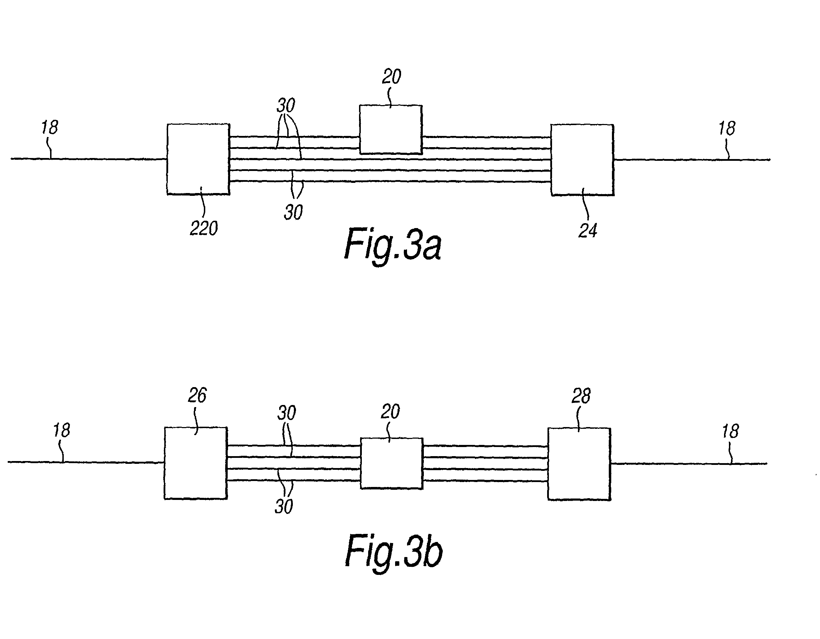

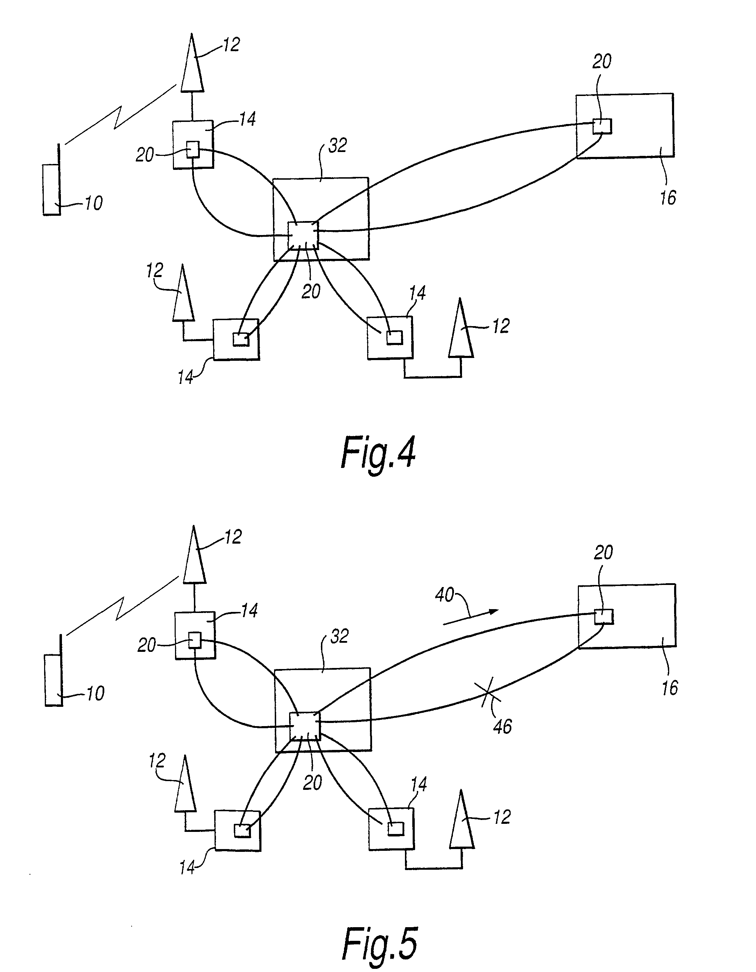

Figure 2 shows a first embodiment of the invention. A mobile user 10 will communicate with base station radio interface 12 via wireless communications. The ATM network in this case, however, comprises a decentralised network with each Node B 14 being able to communicate via at least two transmission paths or links 18 with respect to the radio network controller 16. Conveniently the links comprise a number, n, of E1 links. The transmission path can be an optical link, radio link or other type. In a first embodiment of the invention, as shown in Figure 2, each Node B is provided with an inverse multiplexer 20 which enables inverse multiplexing over ATM to occur between the originating Node B and via any intermediate Node B with respect to the radio network controller. IMA exchanges special ATM control cells (ICP) for signalling between IMA nodes. This is also termed IMA signalling or ATM level signalling.
The mechanism by which the inverse multiplexer operates may vary. With reference to Figures 3a and 3b, a transmission path 18 comprises a number of E1 lines 30, blocks 22, 24, 26 & 28 depicting transceivers for enabling E1 communications to be conducted along the transmission path. E1 lines may selectively be connected to the inverse multiplexer 20 associated with each Node B, as in Figure 3a, or all E1 lines may be connected to the inverse multiplexer 20. Thus communication between two Node Bs with an intermediate Node B may or may not involve inverse multiplexing associated with the inverse multiplexer of the intermediate Node B.
With reference to Figure 4, in a second embodiment, a Node B concentrator 22 is employed: Node Bs communicate with respect to a radio network controller using the Node concentrator. There are two links between the Node concentrator and the radio network controller and there are two links between each Node B and the Node B concentrator 32. In this second embodiment higher bit rate transmission lines can be used, which is typically the case in areas of high user penetration. In accordance with the invention, inverse multiplexing over ATM (IMA) is used for cost efficient bandwidth increase and the provision of at least two transmission line paths between source and destination nodes. This provides a benefit of redundancy: if one transmission line or data path breaks down, the communications traffic can be switched to the remaining data path(s). Furthermore, the provision of at least two communication paths improves channel availability.

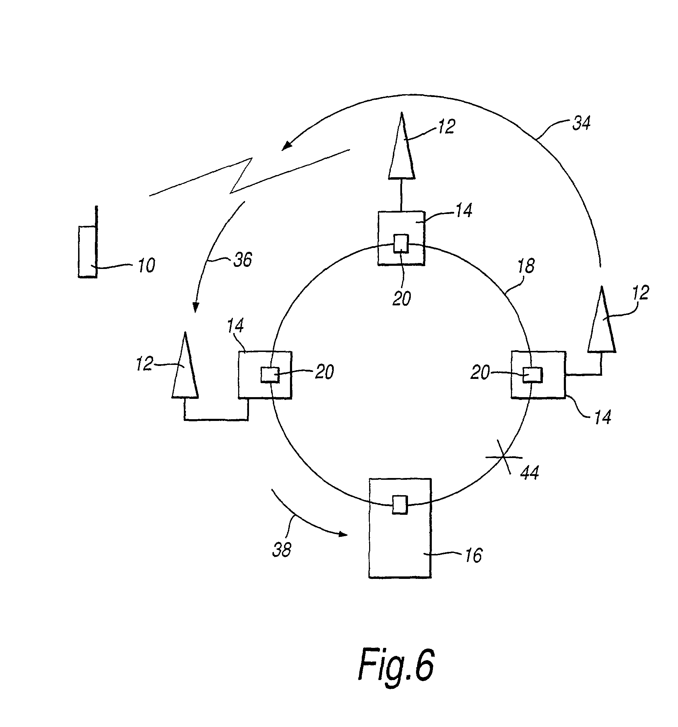

Figures 5 and 6 show the effects of a break in a communication path to a radio network controller: breaks 44 and 46 in respective Figures can be overcome by the continuance of signalling, albeit only across the remaining transmission line comprising a number of E1 lines. It is, of course possible to have more than two transmission lines in the first instance. The direction of signalling from the affected Node Bs is indicated by arrows referenced 34, 36 ,38 and 40.

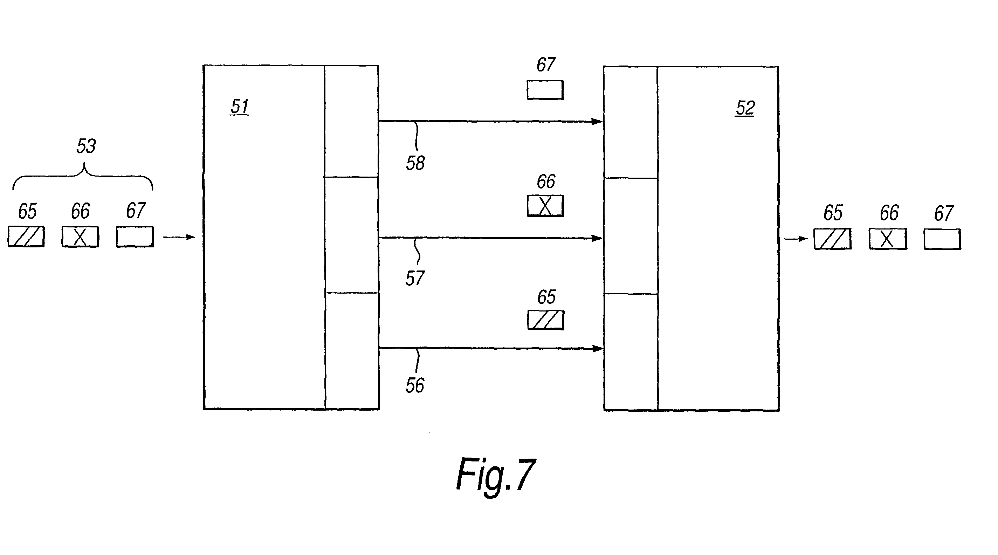

Referring now to Figure 7 the principles of inverse multiplexing over ATM will now be discussed. Inverse multiplexing over ATM (IMA) can be used for the grouping of n 2Mbit/s transmission lines (#0-A2) IMA groups between 51, 52 with a bandwidth of n x 2 Mbit/s. In case of a breakdown occurring in a transmission line n inverse multiplexing over ATM can be configured to provide for a standardised self-recovery of the IMA group. This mechanism can almost seamlessly continue the IMA group operation using the remaining lines. Each 2 Mbit/s line can use nearly any way through the UMTS radio access network as IMA allows to compensate 25 ms or more delay difference between the lines (ATM Forum Technical Specification af-phy-0086.00x).

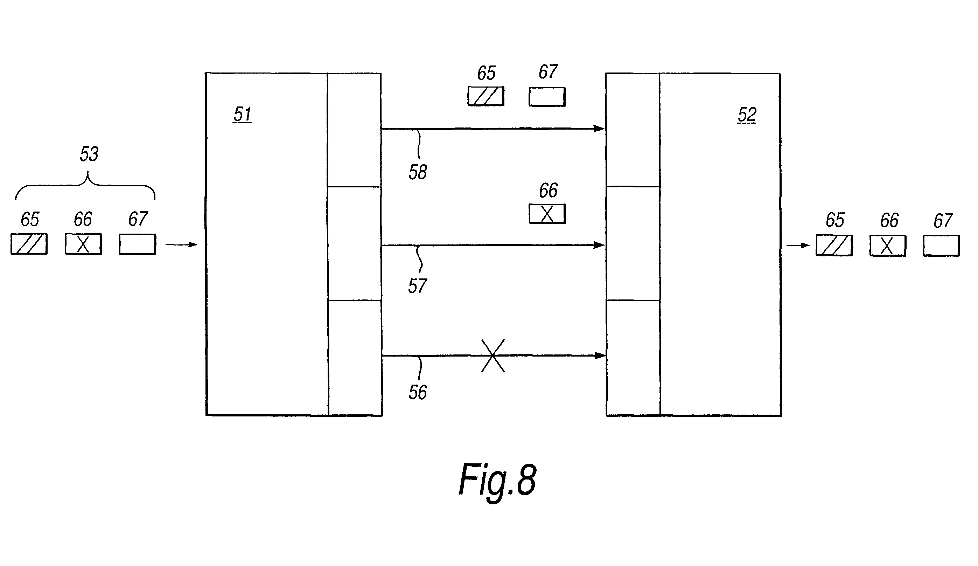

By good network planning all 2 Mbit/s lines that are used to connect the Node B concentrators to the RNC can be organised in a way that compares with the closed loop described above. IMA groups combine two or more lines between the RNC and each Node B concentrator. Referring now to Figure 8, if this IMA loop is opened (i.e. links break down) the self-recovery mechanism of IMA protection mode assures that the Node B concentrators stay connected to the RNC. A simple traffic control ensures that there are sufficient IMA grouped transmission resources between the RNC and each Node B concentrator after ring failure: In IMA protection mode the bandwidth parameter is equivalent to n x 1812 cells/s e. g. for E1. Connection admission control must however ensure that, in the proposed connection of a new ATM node with PCR_{*i*} is acceptable if SIGMA PCR_{*i*} < bandwidth parameter. (This is the traffic control for protection mode.)

In IMA aggregation mode where cost is the dominant factor IMA is used only for bandwidth increase. In case of breakdown of one single line the whole IMA group is taken out of operation until the defect line(s) are repaired. In IMA aggregate mode the bandwidth parameter is equivalent n x 3849 cells/s, e. g. for E1. Connection admission control must however ensure that, in the proposed connection of a new ATM node with PCR_{*i*} is acceptable if SIGMA PCR_{*i*} < bandwidth parameter. (This is the traffic control for aggregation mode.)

In Figure 7, a single ATM cell stream 53, from the ATM layer is input to IMA group 51 at an input 55. The IMA virtual link comprises three physical links 56, 57 and 58, which are transmitted from physical link input/outputs 59, 60 and 61 of IMA group 51. At input/outputs 62, 63 and 64 of IMA group 52 the three physical links are connected. From the ATM cell stream, cells 65, 66 and 67 are transmitted via physical links 56, 58 from IMA group 51 to IMA 52 where they are reassociated with one another to form a representation of the original ATM cell stream. In Figure 8, physical link 56 is unserviceable: ATM cell 65 is transported along physical link 58.

In summary the provision of multiple data paths in 3G and the use of inverse multiplexing for ATM provides a protection mode or an aggregate mode, the advantages of which have neither been suggested or disclosed in literature relating to the standard. The benefits for the invention are believed to far outweigh any perceived advantage in realising low start up costs. In IMA protection mode a simple traffic control ensures that there are sufficient IMA grouped transmission resources between the RNC and each Node B concentrator after ring failure.

## Claims

1. A third generation wireless communications network including a plurality of base station radio interfaces (12) which provide cellular wireless coverage; at least one Node B and a radio network controller (16);
wherein signals and signalling data transmitted between the radio interfaces and the radio network controller is routed between said at least one Node B (14) **characterized in that**
the at least one Node B provides an IMA functionality; **in that** the signals and signalling data transmitted between said at least one node and the radio network controller are transmitted in asynchronous transfer mode;
**in that** there are at least two signal paths between the said at least one node and the radio network controller whereby to provide an IMA protection mode or an IMA aggregation mode.

2. A network according to claim 1 wherein there is provided a plurality of network entities comprising Node Bs and a radio network controller
wherein each node is operable to communicate with at least two other nodes or at least one other Node B and the radio network controller;
wherein there are physical links between the radio interface and each Node B;
wherein there at least two signal paths between each Node B and at least two other network entities.

3. A network according to claim 1 wherein there are a plurality of nodes;
wherein the Node Bs are grouped such that they communicate with at least one Node B concentrator;
wherein the at least one concentrator communicates with the radio network controller and,
wherein there are at least two transmission paths between the at least one Node B concentrator and the radio network controller.

4. A network according to any one of claims 1 to 3 wherein the transmission lines between the nodes and the radio network controller comprise a plurality of E1 transmission lines.

5. A network according to claim 2 wherein the node B's and the radio network controller are equipped with ATM inverse multiplexors.

6. A network according to claim 3 wherein ATM multiplexing equipment is located at the node concentrator and radio network controller.

7. A network according to claim 3 wherein there are a plurality of transmission paths between the node Bs and the node concentrators.

## Patentansprüche

1. Ein Funkkommunikationsnetz der 3. Generation, welches mehrere Basisstations-Funkschnittstellen 12, die eine zellulare Funkabdeckung bieten, sowie mindestens einen (1) B-Knoten und eine Funknetz-Steuereinheit (16) umfasst;
wobei die zwischen den Funkschnittstellen und der Funknetz-Steuereinheit übertragenen Signale und Signalisierungsdaten über den besagten mindestens einen B-Knoten (14) geroutet werden;
**dadurch gekennzeichnet, dass** der mindestens eine B-Knoten eine IMA-Funktionalität besitzt;
weiterhin **dadurch gekennzeichnet, dass** die zwischen dem besagten mindestens einen Knoten und der Funknetz-Steuereinheit übertragenen Signale und Signalisierungsdaten im ATM-Modus übertragen werden;
weiterhin **dadurch gekennzeichnet, dass** es zwischen dem besagten mindestens einen Knoten und der Funknetz-Steuereinheit mindestens 2 Signalwege gibt, mittels derer ein IMA-Schutzmodus oder ein IMA-Aggregationsmodus bereitgestellt wird.

2. Ein Netz gemäß Anspruch 1, wobei mehrere Netzinstanzen vorhanden sind, die B-Knoten und eine Funknetz-Steuereinheit umfassen;
wobei jeder Knoten mit mindestens 2 anderen Knoten oder mit mindestens einem (1) anderen B-Knoten und der Funknetz-Steuereinheit kommunizieren kann;
wobei es physische Verbindungen zwischen der Funkschnittstelle und jeden B-Knoten gibt;
und wobei es zwischen jedem B-Knoten und mindestens 2 anderen Netzinstanzen mindestens 2 Signalwege gibt.

3. Ein Netz gemäß Anspruch 1, wobei es mehrere Knoten gibt;
wobei die B-Knoten so gruppiert sind, dass sie mit mindestens einem (1) B-Knoten-Konzentrator kommunizieren;
wobei der mindestens eine Konzentrator mit der Funknetz-Steuereinheit kommuniziert;
und wobei es zwischen dem mindestens einen B-Knoten-Konzentrator und der RNC mindestens 2 Übertragungswege gibt.

4. Ein Netz gemäß einem beliebigen der Ansprüche 1 bis 3, wobei die Übertragungsleitungen zwischen den Knoten und der Funknetz-Steuereinheit aus mehreren E1-Übertragungsleitungen bestehen.

5. Ein Netz gemäß Anspruch 2, wobei die B-Knoten und die Funknetz-Steuereinheit mit ATM-Invers-Multiplexern ausgestattet sind.

6. Ein Netz gemäß Anspruch 3, wobei die ATM-Multiplex-Einrichtungen zwischen dem Knoten-Konzentrator und der Funknetz-Steuereinheit sitzen.

7. Ein Netz gemäß Anspruch 3, wobei es zwischen den B-Knoten und den Knoten-Konzentratoren mehrere Übertragungswege gibt.

## Revendications

1. Réseau de télécommunications sans fil de troisième génération comprenant une pluralité d'interfaces radioélectriques formant stations de base (12) qui procurent une couverture sans fil cellulaire, au moins un noeud B et une commande de réseau radiotéléphonique (16),
dans lequel les signaux et données de signalisation transmis entre les interfaces radioélectriques et la commande de réseau radiotéléphonique sont acheminés entre ledit au moins un noeud B (14), **caractérisé en ce que** :
le au moins un noeud B procure une fonctionnalité IMA ;
**en ce que** les signaux et données de signalisation transmis entre ledit au moins un noeud et la commande de réseau radiotéléphonique sont transmis en mode de transfert asynchrone ;
**en ce qu'**il y a au moins deux trajets de signalisation entre ledit au moins un noeud et la commande de réseau radiotéléphonique de sorte à procurer un mode de protection par IMA ou un mode de regroupement par IMA.

2. Réseau selon la revendication 1 dans lequel on procure une pluralité d'entités de réseau comprenant des noeuds B et une commande de réseau radiotéléphonique,
dans lequel chaque noeud est utilisable pour communiquer avec au moins deux autres noeuds ou au moins un autre noeud B et la commande de réseau radiotéléphonique ;
dans lequel il y a des liaisons physiques entre l'interface radioélectrique et chaque noeud B ;
dans lequel il y a au moins deux trajets de signalisation entre chaque noeud B et au moins deux autres entités de réseau.

3. Réseau selon la revendication 1 dans lequel il y a une pluralité de noeuds,
dans lequel les noeuds B sont groupés de telle sorte qu'ils communiquent avec au moins un concentrateur de noeuds B ;
dans lequel le au moins un concentrateur communique avec la commande de réseau radiotéléphonique, et
dans lequel il y a au moins deux voies de transmission entre le au moins un concentrateur de noeuds B et la commande de réseau radiotéléphonique.

4. Réseau selon l'une quelconque des revendications 1 à 3 dans lequel les lignes de transmission entre les noeuds et la commande de réseau radiotéléphonique sont constituées par une pluralité de lignes de transmission E1.

5. Réseau selon la revendication 2 dans lequel les noeuds B et la commande de réseau radiotéléphonique sont équipés de multiplexeurs inverses ATM.

6. Réseau selon la revendication 3 dans lequel l'équipement de multiplexage ATM est situé au niveau du concentrateur de noeuds et de la commande de réseau radiotéléphonique.

7. Réseau selon la revendication 3 dans lequel il y a une pluralité de voies de transmission entre les noeuds B et les concentrateurs de noeuds.
